# EUROPEAN PATENT APPLICATION

(11) **EP 4 616 917 A1**
(43) Date of publication of application: **17.09.2025**
(21) Application number: 24215400.3
(22) Date of filing: 26.11.2024
(51) Int. Cl.: A62C 3/16

(54) **FIRE EXTINGUISHING SYSTEM OF ENERGY STORAGE SYSTEM**

(30) Priority: 11.03.2024 KR 20240033859
(71) Applicant: SAMSUNG SDI CO., LTD., Yongin-si, Gyeonggi-do 17084 (KR)
(72) Inventor: KIM, Jeong Woo, 17084 Yongin-si (KR); YANG, Jong Woon, 17084 Yongin-si (KR)
(74) Representative: Marks & Clerk LLP

(57) **Abstract**

Disclosed is a fire extinguishing system of an energy storage system, the energy storage system including a plurality of battery racks each configured to receive a plurality of battery modules. The fire extinguishing system includes: a sensing unit configured to sense at least one of temperature, voltage, or smoke of the battery modules; and a fire extinguishing unit spraying a fire extinguishing agent to the battery module if at least one of values sensed by the sensing unit is higher than a preset threshold, wherein the fire extinguishing unit comprises a spray pipe connected to a top of the battery module, the spray pipe allowing the fire extinguishing agent to be sprayed therethrough, a plurality of spray holes is formed through the spray pipe so as to correspond to positions of battery cells of the battery module, and the spray pipe is rotationally arranged such that the spray holes are arranged in a direction diagonal to the battery module.

## Description

### BACKGROUND

### 1. Field

Aspects of some embodiments of the present disclosure relate to a fire extinguishing system of an energy storage system.

### 2. Description of the Related Art

An energy storage system is a system capable of storing surplus electricity or storing electricity generated by utilizing renewable energy. By utilizing an energy storage system, idle electricity may be stored during times of low electricity demand and then supplied during times of high electricity demand to more smoothly control electricity supply and demand.

The space or facility where the energy storage system is installed and operated may desirably be equipped with facilities to suppress battery fires caused by electric shock, short circuit, external surge, etc. A fire extinguishing system may include a fire sensor and a spring cooler or a fire extinguishing agent sprayer installed in the vicinity of a battery rack or on the ceiling, etc.

The fire extinguishing system may be an indirect spray type fire extinguishing system configured to spray water or a fire extinguishing agent to a battery or the entire area where the battery is installed in the event of a battery fire. However, as the energy density of the battery continues to increase, the flame volume and ejection pressure at a vent of battery cell are increasing, which may make it difficult to extinguish or suppress fires early with some fire suppression equipment. Therefore, it may be desirable to provide a fire extinguishing system capable of effectively suppressing fires generated from a plurality of batteries in an energy storage system and extinguishing high-pressure fires early.

The above information disclosed in this Background section is only for enhancement of understanding of the background and therefore the information discussed in this Background section does not necessarily constitute prior art.

### SUMMARY

Aspects of some embodiments of the present disclosure relate to a fire extinguishing system of an energy storage system that may be capable of effectively extinguishing a fire in the event of the fire.

Aspects of some embodiments of the present disclosure include a fire extinguishing system of an energy storage system capable of effectively suppressing and extinguishing a fire.

It should be noted that characteristics of embodiments according to the present disclosure are not limited to the characteristics as mentioned above, and other unmentioned characteristics of embodiments according to the present disclosure will be more clearly understood by those skilled in the art from the following description.

According to some embodiments of the present disclosure, there is provided a fire extinguishing system of an energy storage system, the energy storage system including a plurality of battery racks each configured to receive a plurality of battery modules. The fire extinguishing system includes a sensing unit configured to sense at least one of the temperature, voltage, and smoke of each of the battery modules and a fire extinguishing unit configured to spray a fire extinguishing agent to the battery module if at least one of the values sensed by the sensing unit is higher than a preset threshold, wherein the fire extinguishing unit includes a spray pipe connected to the top of the battery module, the spray pipe being configured to allow the fire extinguishing agent to be sprayed therethrough, a plurality of spray holes is formed through the spray pipe so as to correspond to the positions of battery cells of the battery module, and the spray pipe is rotationally arranged such that the spray holes are located in a direction diagonal to the battery module.

According to some embodiments, the battery module may include a top cover having a plurality of through-openings formed so as to correspond to the positions of vent holes of the battery cells, and the through-openings may be formed through the top cover.

According to some embodiments, each of the battery racks may include a main frame on which pipes are installed and a subframe configured to support the battery module, the subframe having a seating groove, in which the spray pipe is seated, formed therein, and the subframe may include an extension portion extending from the seating groove inwardly of the battery rack, the extension portion being formed in an insertion direction of the battery module.

According to some embodiments, the extension portion may be bent in a direction diagonal to a direction toward the top cover.

According to some embodiments, a through-hole configured to allow the fire extinguishing agent sprayed from the spray hole to pass therethrough may be formed in the seating groove, and the through-hole may be formed at the position corresponding to the direction toward the spray hole.

According to some embodiments, the fire extinguishing agent sprayed from the spray hole may be sprayed in a straight line toward the through-hole.

According to some embodiments, the fire extinguishing agent sprayed from the spray hole may be sprayed in a straight line from the through-hole toward the top cover.

According to some embodiments, the battery rack may be formed such that the extension portion and the top cover come into contact with each other upon insertion of the battery module in the state in which the extension portion and the top cover are spaced apart from each other.

According to some embodiments, the bent angle of the extension portion may be set to an angle such that the subframe contacts the top cover if the subframe is pressed by the battery module.

According to some embodiments, the length from the center of the spray pipe to an end of the extension portion may be set to a length such that a bent end of the subframe comes into contact with the top cover if the subframe is pressed by the battery module.

According to some embodiments, the spray angle of the fire extinguishing agent from the spray hole may be set based on at least one of the bent angle of the extension portion, the distance from the center of the spray pipe to the point where the extension portion and the top cover contact each other, and a range of the through-opening of the top cover.

According to some embodiments, the maximum angle at which the spray hole is rotationally arranged may be based on a position in front of the through-opening such that the fire extinguishing agent is not sprayed to the through-opening.

According to some embodiments, the minimum angle at which the spray hole is rotationally arranged may be based on an upper surface of the top cover such that the fire extinguishing agent is not sprayed out of the top cover.

According to some embodiments, the minimum angle at which the spray hole is rotationally arranged may be based on the point where the top cover and the extension portion contact each other such that the fire extinguishing agent is not sprayed out of the top cover.

According to some embodiments, the spray hole of the spray pipe may be rotationally arranged inwardly of the battery rack.

According to some embodiments, the distance from the spray hole to the top cover may be 8 mm to 12 mm.

At least some of the above and other features of the invention are set out in the claims.

### BRIEF DESCRIPTION OF THE DRAWINGS

The accompanying drawings, which are incorporated in this specification, illustrate aspects of some embodiments and serve to further illustrate the technical ideas of embodiments according to the present disclosure in conjunction with the detailed description of some embodiments that follows, and the present disclosure is not to be construed as limited to what is shown in such drawings. In the drawings:
FIG. 1 is a block diagram schematically showing a fire extinguishing system according to some embodiments of the present disclosure;
FIG. 2 is a schematic view illustratively showing the fire extinguishing system according to some embodiments of the present disclosure;
FIG. 3 is a perspective view briefly showing major parts of the fire extinguishing system shown in FIG. 1;
FIG. 4 is a partial perspective view showing a battery rack according to some embodiments of the present disclosure;
FIG. 5 is a perspective view showing a direction of movement of a fire extinguishing agent in the battery rack of FIG. 4;
FIG. 6 is a perspective view showing a battery module and a spray pipe shown in FIG. 4;
FIG. 7 is an enlarged perspective view of a coupling region between the battery module and the spray pipe shown in FIG. 6;
FIG. 8 is a side view showing a top cover of the battery module and the spray pipe shown in FIG. 6;
FIG. 9 is an enlarged view showing one side of the top cover of the battery module and the spray pipe shown in FIG. 8;
FIG. 10 is a perspective view showing a lower surface of the spray pipe shown in FIG. 4;
FIG. 11 is an enlarged perspective view of part C shown in FIG. 10;
FIG. 12 is a plan view showing the lower surface of the spray pipe shown in FIG. 11;
FIG. 13 is an enlarged perspective view showing a part of a lower surface of a spray pipe according to some embodiments of the present disclosure;
FIG. 14 is a plan view showing a part of the lower surface of the spray pipe shown in FIG. 13;
FIG. 15 is a schematic view briefly showing a fire extinguishing process according to some embodiments of the present disclosure; and
FIG. 16 is a schematic view briefly showing a fire extinguishing system according to some embodiments of the present disclosure.

### DETAILED DESCRIPTION

Hereinafter, aspects of some embodiments of the present disclosure will be described in more detail with reference to the accompanying drawings. It should be understood that the terms or words used in the specification and appended claims should not be construed as being limited to general and dictionary meanings, but should be construed based on meanings and concepts according to the technical idea of the present disclosure on the basis of the principle that the inventor is permitted to define appropriate terms for the best explanation. Embodiments described in this specification and constructions shown in the drawings illustrated and describe aspects of some embodiments and do not speak for the entirety of the technical idea of the present disclosure, and therefore it should be understood that various replaceable equivalents and modifications may be possible at the time of filing the present application.

As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

The accompanying drawings may not be to scale and some components may be exaggerated in dimensions in order to facilitate understanding of the present disclosure. In different embodiments, the same components may be denoted by the same reference numerals.

A reference to two comparables being "identical" means that they are "substantially identical." Thus, substantially the same may include deviations that are considered low in the art, such as deviations of less than 5%. If a parameter is uniform in a given region, this may mean that the parameter is uniform from an average perspective.

Although first, second, and the like are used to describe various components, the components are not limited by these terms. These terms are used only to distinguish one component from another, and a first component may be a second component unless otherwise noted.

Throughout the specification, each component may be singular or plural unless otherwise indicated.

If any configuration is located "above" (or "below") a component or "on" (or "under") the component, this may mean not only that the configuration is arranged abutting an upper surface (or a lower surface) of the component, but that another configuration may be interposed between the component and the configuration located on (or under) the component.

It should also be understood that if a component is described as being "on," "connected to," or "coupled to" another component, the components may be directly connected or linked to each other, another component may be "interposed" between other components, or the components may be "connected," "coupled," or "linked" to each other via another component.

As used herein, the term "and/or" includes any and all combinations of one or more of the associated listed items. The use of "may" in describing embodiments of the present disclosure is directed to "one or more embodiments of the present disclosure." Expressions such as "one or more" preceding a list of elements modify the list of elements as a whole and do not modify individual elements in the list.

Throughout the specification, references to "A and/or B" mean A, B, or A and B, unless otherwise indicated, and references to "C to D" mean C or higher and D or lower, unless otherwise indicated.

If a phrase such as "at least one of A, B, and C," "at least one of A, B, or C," "at least one selected from the group consisting of A, B, and C," or "at least one selected from A, B, and C" is used to specify a list of elements A, B, and C, the phrase may refer to any suitable combination.

The term "use" may be considered synonymous with the term "utilize." As used herein, the terms "substantially" and "about" and similar terms are used as terms of approximation, not as terms of degree, and are intended to take into account inherent variations in measured or calculated values that would be recognized by a person of ordinary skill in the art.

While terms such as "first", "second", and "third" may be used herein to describe various elements, components, regions, layers, and/or sections, such elements, components, regions, layers, and/or sections are not to be limited by such terms. The terms are used to distinguish one element, component, region, layer, or section from another element, component, region, layer, or section. Thus, a first element, component, region, layer, or section discussed below may be named a second element, component, region, layer, or section without departing from the teachings of the disclosed embodiments.

In order to describe the relationship of one element or feature to another element(s) or feature(s) as shown in the drawings, spatially relative terms such as "beneath," "below," "lower," "above," "upper," and the like may be used herein for ease of description. It will be understood that spatially relative positions are intended to encompass different directions of a device in use or operation in addition to the orientations depicted in the figures. For example, if the device in the drawings is inverted, an element or feature described as "beneath" or "below" becomes "above" or "upper." Thus, "beneath" is a concept that encompasses "above" and "below".

The terminology used herein is intended to describe embodiments of the present disclosure and is not intended to limit the present disclosure.

A controller and/or other related devices or parts according to the present disclosure may be implemented using any suitable hardware, firmware (e.g., semiconductor on demand), software, or any suitable combination of software, firmware, and hardware. For example, various components of the controller and/or the other related devices or parts according to the present disclosure may be formed on a single integrated circuit chip or on separate integrated circuit chips. The various components of the controller may be implemented on a flexible printed circuit film, and may be formed on a tape carrier package, a printed circuit board, or on the same substrate as the controller. The various components of the controller may be processes or threads executed by on one or more processors in one or more computing devices, which may execute computer program instructions and interact with the other components to perform various functions described below. The computer program instructions may be stored in memory be executable in a computing device using a standard memory device, such as random access memory. The computer program instructions may also be stored on other non-transitory computer readable media, such as a CD-ROM or flash drive. Those skilled in the art should recognize that the functions of various computing devices may be combined with each other or integrated into a single computing device, or the function of a specific computing device may be distributed to one or more other computing devices, without departing from the scope of embodiments of the present disclosure.

In an example, the controller according to the present disclosure may be operated on a computer including a central processing unit, a mass storage device such as a hard disk or a solid state drive, a volatile memory device, an input device such as a keyboard or a mouse, and an output device such as a monitor or a printer.

Hereinafter, a fire extinguishing system of an energy storage system according to some embodiments of the present disclosure will be described in detail with reference to the accompanying drawings.

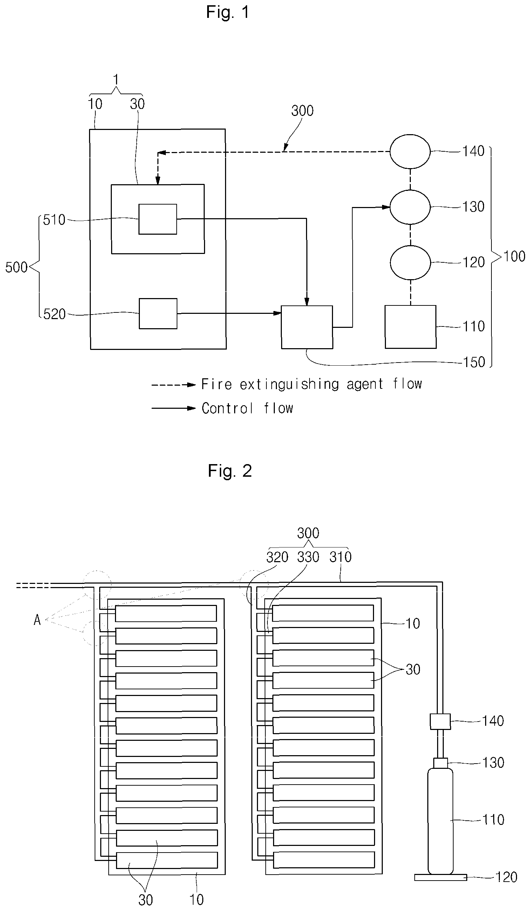

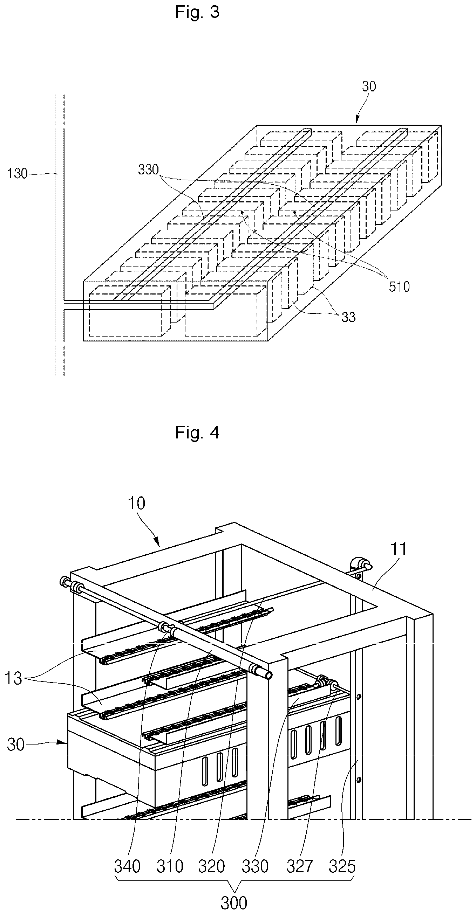

FIG. 1 is a block diagram schematically showing a fire extinguishing system according to some embodiments of the present disclosure. FIG. 2 is a schematic view illustratively showing the fire extinguishing system according to some embodiments of the present disclosure. FIG. 3 is a perspective view briefly showing aspects of the fire extinguishing system shown in FIG. 1. FIG. 4 is a partial perspective view showing a battery rack according to some embodiments of the present disclosure.

Referring to FIGS. 1 to 4, the fire extinguishing system of the energy storage system (or energy storage apparatus) according to some embodiments of the present disclosure may mainly include a supply unit 100 configured to supply a fire extinguishing agent to the energy storage system 1, a fire extinguishing unit 300 configured to transport and spray the fire extinguishing agent to the energy storage system 1, and a sensing unit 500 configured to monitor a fire.

Referring to FIGS. 1 and 2, the supply unit 100 may include an agent container 110 configured to store the fire extinguishing agent, a leak detector 120 configured to detect leakage from the agent container 110, a main valve 130 configured to supply the fire extinguishing agent and stop the supply of the fire extinguishing agent, a regulator 140 configured to regulate the supply pressure and time of the fire extinguishing agent, and a controller 150 configured to perform control.

Referring to FIGS. 2 to 4, the fire extinguishing unit 300 may include a main pipe 310 through which the fire extinguishing agent is transported, a branch pipe 320 diverging from the main pipe 310, and a spray pipe 330 connected to a battery module 30 and through which the fire extinguishing agent is sprayed.

Referring to FIG. 1, the sensing unit 500 may include a first sensor 510 configured to sense a fire in the battery module 30, and a second sensor 520 configured to sense smoke in the event of a fire outside the battery module 30.

The energy storage system 1 will be briefly described before describing the fire extinguishing system in detail.

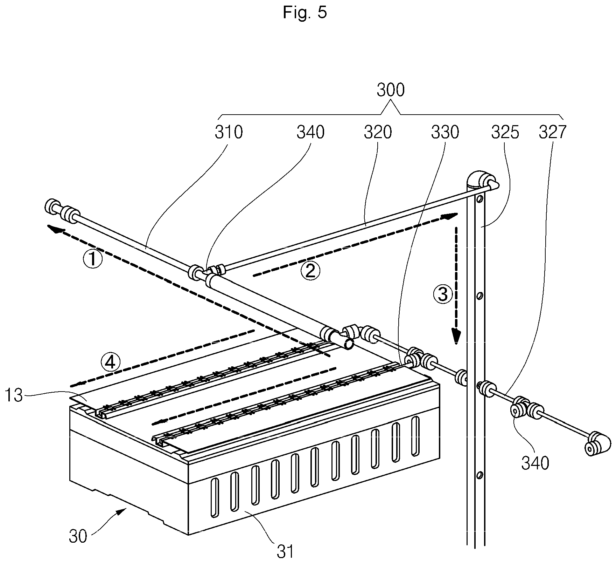

Referring to FIGS. 1 to 4, according to some embodiments, the energy storage system 1 may include a plurality of battery modules 30 mounted in each of a plurality of battery racks 10 and the battery modules 30 may include a plurality of battery cells 33 received in a case 31 (see e.g. FIG. 5) of each battery module 30. Each battery cell 33 may be a secondary battery capable of being charged and discharged.

The battery rack 10 may include a main frame 11 on which pipes may be installed and a subframe 13 configured to support the battery modules 30. The main frame 11 may be roughly hexahedral in shape, and parts thereof corresponding to plate surfaces may be closed or open. The subframe 13 may be arranged in a direction perpendicular to a longitudinal direction of the battery rack 10 (upward-downward direction in FIG. 4) to support the battery modules 30. According to some embodiments, if the battery modules 30 are placed on the subframe 13, the subframe 13 may be pressed by the battery modules 30 and may droop downward. For example, the subframe 13 may drop by about 3 mm. According to some embodiments, therefore, the subframe 13 may be designed so as to be spaced apart from the battery modules 30 by about 3 mm.

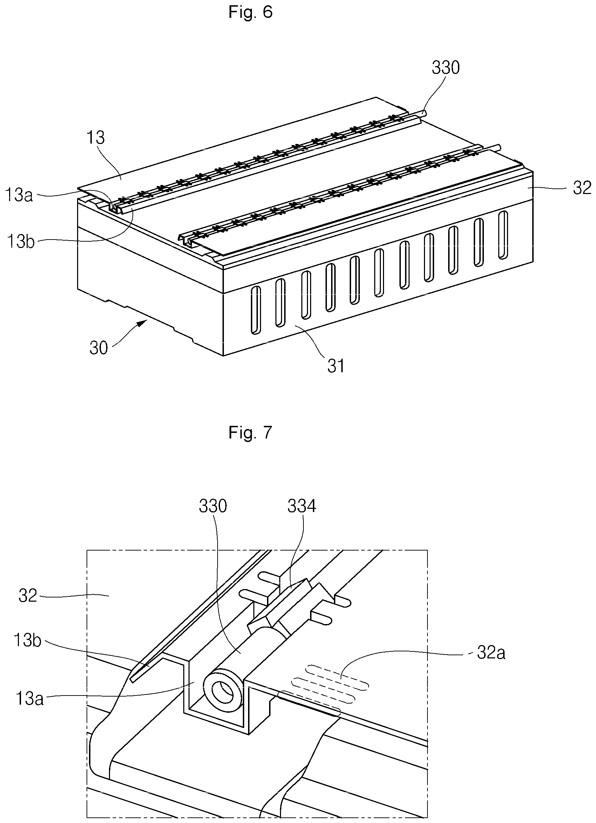

According to some embodiments, a seating groove 13a (see e.g. FIG. 6), in which the spray pipe 330, a description of which will follow, is seated, may be formed on the subframe 13. The seating groove 13a may be formed in an insertion direction of the battery module 30. The size of the seating groove 13a may be equal to or greater than the length and diameter of the spray pipe 330, which will be described in more detail later.

According to some embodiments, an extension portion 13b (see e.g. FIG. 6) may be formed on the subframe 13 extending from the seating groove 13a in an inward direction of the battery rack 10. The extension portion 13b may be formed in an extension direction of the seating groove 13a. The extension portion 13b may be formed in the insertion direction of the battery module 30. According to some embodiments, the extension portion 13b may be formed as the result of an end of the subframe 13 being bent downward. The extension portion 13b may be bent in a direction diagonal to the direction of the battery module 30. The extension portion 13b may block the possibility of heat propagation to the back row in the event of a fire in a battery cell in the battery module 30. The second sensor 520 configured to sense smoke may be installed on the battery rack 10, which will be described later.

The battery module 30 may include a plurality of battery cells 33 housed inside the case 31, which has a roughly hexahedral shape. The battery cells 33 may be spaced apart from each other by a distance (e.g., a set or predetermined distance), and may be arranged in a plurality of rows. The battery module 30 may also include a top cover 32 (see e.g. FIG. 6) configured to cover the tops of the plurality of battery cells 33 after the plurality of battery cells 33 is received in the case 31. The top cover 32 may have a plurality of through-openings 32a (see e.g. FIG. 7) formed so as to correspond to the position of a vent hole of each of the battery cells 33. However, embodiments according to the present disclosure are not limited thereto. The battery module 30 may not be separately provided with the top cover 32, and the case 31 may be formed as a single body, or the case 31 may have covers formed on a bottom and a side thereof. The top cover 32 may refer to the top of the case 31.

Each battery module 30 may be equipped with a battery management system (BMS), which may transmit a fire signal to the controller 150, a description of which will follow, in the event of a fire in the battery cell 33. A plurality of first sensors 510 may be installed in the battery module 30, and a second sensor 520 may be installed externally on the battery rack 10, which will be described later. The first sensor 510 may be a sensor configured to sense ambient temperature in the battery module 30. According to some embodiments, the first sensor 510 may be a voltage sensor. According to some embodiments, the first sensors 510 may be arranged one for each row of battery cells 33, as shown in FIG. 3. In this case, two first sensors 510 may be installed so as to face each other. The number and installation position of the first sensors 510 may vary according to various embodiments.

If the value measured by the first sensor 510 is higher than a preset threshold, the controller 150 may determine to supply the fire extinguishing agent. According to some embodiments, if the temperature in the battery module 30 measured by the first sensor 510 is equal to or higher than a threshold or the voltage is equal to or higher than a threshold, the BMS may send an abnormality signal to the controller 150.

According to some embodiments, the BMS may determine that an abnormal condition exists if a threshold temperature is sensed, and then may determine that an abnormality has occurred in the battery when a temperature higher than the threshold temperature by approximately one degree or more is sensed. According to some embodiments, the BMS may determine that an abnormality has occurred in the battery if a temperature increase of about 5 degrees Celsius(°C) or more in one second is successively detected twice. For voltage, if voltage equal to or higher than a threshold voltage is successively detected twice, the BMS may determine that an abnormality has occurred in the battery and may drop the voltage.

The fire extinguishing unit 300 may be installed on the battery rack 10 and battery modules 30. If a fire is sensed by the sensing unit 500, the fire extinguishing agent may be supplied through the supply unit 100, and the fire extinguishing agent may be transported to the battery rack 10 and the battery modules 30 through the fire extinguishing unit 300. Consequently, a fire occurring in the battery module 30 may be initially quickly extinguished. In the fire extinguishing system of the present disclosure, it is possible to supply the fire extinguishing agent to a battery cell 33 in which a fire has occurred and battery cells 33 adjacent thereto, among the battery cells 33 in the battery module 30.

Hereinafter, the fire extinguishing system according to some embodiments of the present disclosure will be described in detail (components not shown in FIGS. 5 to 9 will be described with reference to FIGS. 1 to 4).

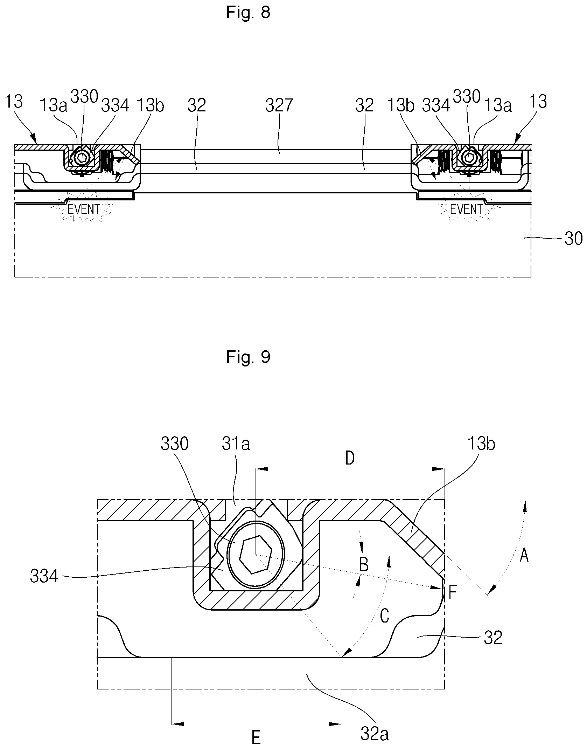

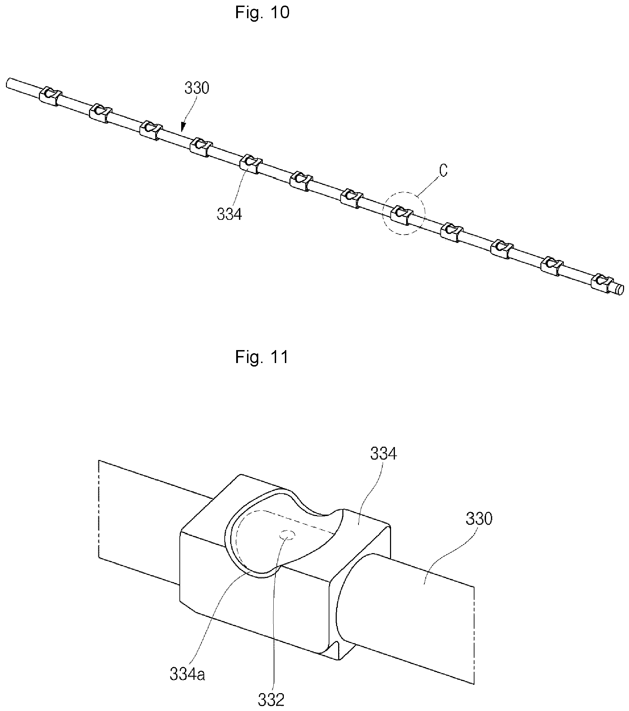

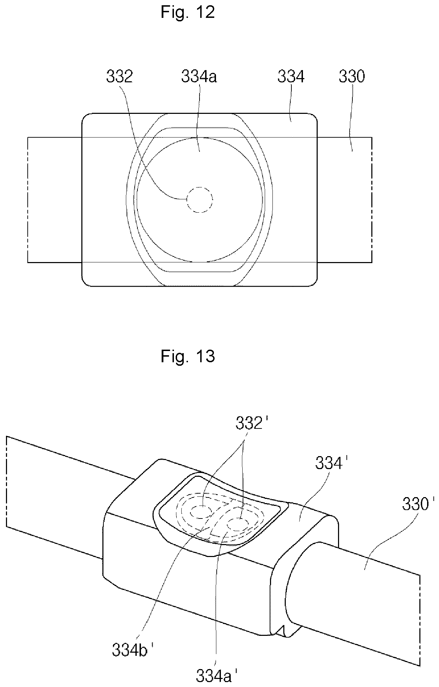

FIG. 5 is a perspective view showing a direction of movement of the fire extinguishing agent in the battery rack of FIG. 4. FIG. 6 is a perspective view showing the battery module and the spray pipe shown in FIG. 4. FIG. 7 is an enlarged perspective view of a coupling region between the battery module and the spray pipe shown in FIG. 6. FIG. 8 is a side view showing the top cover of the battery module and the spray pipe shown in FIG. 6. FIG. 9 is an enlarged view showing one side of the top cover of the battery module and the spray pipe shown in FIG. 8. FIG. 10 is a perspective view showing a lower surface of the spray pipe shown in FIG. 4. FIG. 11 is an enlarged perspective view of part C shown in FIG. 10. FIG. 12 is a plan view showing the lower surface of the spray pipe shown in FIG. 11.

Referring to FIG. 1, components of the supply unit 100, the fire extinguishing unit 300, and the sensing unit 500 of the fire extinguishing system may be organically connected to each other.

First, the supply unit 100 will be described in more detail with reference to FIGS. 1 and 2.

The agent container 110 may be a kind of storage container configured to store the fire extinguishing agent. The agent container 110 may be fixed to an installation site using a package method or a wall mounting method. According to some embodiments, the agent container 110 may be a pressure vessel configured to store a high-pressure fire extinguishing agent. Any of commonly used fire extinguishing agents, such as a gaseous extinguishing agent, e.g., HFC-23/HFC-125/HFC227ea, CF₃CF₂C(O)CF(CF₃)₂, or water, may be used as the fire extinguishing agent. The fire extinguishing agent may be stored in the agent container 110 using an accumulation method or a pressurization method. Consequently, the internal pressure of the agent container 110 may vary depending on the country in which the fire extinguishing system is used or the type of the fire extinguishing agent (e.g., a domestic fire cylinder filling pressure range of 25 to 42 bar, an international fire cylinder filling pressure range of 25 to 34.5 bar, and 50 bar or more for a gaseous extinguishing agent (HFC-23/HFC-125/HFC227ea)). According to some embodiments, the pressure, flow rate, and spray time may be regulated by the regulator 140 if the fire extinguishing agent is discharged from the high-pressure agent container 110. If spray of the fire extinguishing agent is determined by the controller 150, the main valve 130 may be opened to spray the fire extinguishing agent.

The leak detector 120 may be integrally formed with the agent container 110 or coupled to the agent container 110. The leak detector 120 may detect leakage of the fire extinguishing agent before spray of the fire extinguishing agent. For example, the leak detector 120 may be a load cell coupled to the agent container 110 to detect weight loss.

The main valve 130 may function to open and close a discharge portion of the agent container 110. The main valve 130 may open and close the discharge portion of the agent container 110 under control of the controller 150. If the main valve 130 is opened, the fire extinguishing agent may be discharged from the agent container 110 and may move to the regulator 140 along a discharge pipe.

The regulator 140 may function to regulate the spray pressure of the fire extinguishing agent to a final spray pressure. The final spray pressure of the fire extinguishing agent may be preset, and the regulator may be configured to implement the preset final spray pressure. For example, the final spray pressure may be set to about 2 to 5 bar. The discharge pipe may be a stainless steel (STS or SUS) tube or a flexible hose, and may be connected to the main pipe 310, which will be described later.

The main valve 130 and the regulator 140 may be controlled by the controller 150. As an example, the controller 150 may be a kind of control board including a processor, executable memory, a communication device, and a display. The controller 150 may communicate with the first sensor 510 and the second sensor 520, and may control the main valve 130 and the regulator 140. In the event of a fire, the controller 150 may sense the fire through the sensing unit 500 and may open the main valve 130. The controller 150 may control the regulator 140 to discharge the fire extinguishing agent at the preset final spray pressure and to guide the fire extinguishing agent to the fire extinguishing unit 300.

Referring to FIGS. 2 to 4, the fire extinguishing unit 300 may include a main pipe 310, connected to the agent container 110, through which the fire extinguishing agent is transported, and a branch pipe 320 diverging from the main pipe 310. The fire extinguishing unit 300 may also include a rack pipe 325 connected to the branch pipe 320 and located on each battery rack 10, a spray pipe 330 located adjacent to each battery module 30, and a connection pipe 340 configured to connect the pipes to each other. All of the pipes may be in the shape of a hollow pipe (in some figures, the main pipe, the branch pipe, the rack pipe, and the spray pipe are shown as having cylindrical or cuboidal shapes for ease of representation). According to some embodiments, the main pipe 310 and the branch pipes 320 may be configured to perform a single function.

The main pipe 310, to which the plurality of pipes is connected, may extend to the energy storage system 1. The branch pipe 320 may be coupled to the connection pipe 340 connected to the main pipe 310, and may be installed adjacent to or on each battery rack 10. The rack pipe 325 connected to the branch pipe 320 may be installed on each battery rack 10. The rack pipe 325 may be connected to the plurality of branch pipes 320, and the branch pipes 320 may be installed parallel to the battery module 30. The connection pipe 340, which may be branched in two directions, three directions, four directions, and the like, may be coupled to the connection between the plurality of main pipes 310, the connection between the main pipe 310 and the branch pipe 320, and the connection between the branch pipe 320 and the rack pipe 325. In the event of a fire, the fire extinguishing agent supplied from the agent container 110 may be transported to the energy storage system 1 via the main pipe 310, and may be supplied to the respective battery modules 30 via the branch pipe 320 and the spray pipe 330.

One battery rack 10 will be described by way of example with reference to FIGS. 4 and 5.

Defining the direction in which the battery modules 30 are inserted as the front of the battery rack 10, the main pipe 310 may be coupled to the front top of the battery rack 10. One branch pipe 320 may be connected to the main pipe 310 and located at the upper part of the battery rack 10. The branch pipe 320 may be located in the insertion direction of the battery module 30. For example, the branch pipe 320 may be located in the upper middle of the battery rack 10. The rack pipe 325 may be connected to the rear of the branch pipe 320. The rack pipe 325 may be arranged in the longitudinal direction of the battery rack 10. For example, the rack pipe 325 may be located in the rear middle of the battery rack 10. The spray pipe 330 may be connected to the rack pipe 325, and the spray pipe 330 may be located adjacent to each of the battery modules 30. The spray pipes 330 may be connected to the rack pipe 325, or may be connected to the rack pipe 325 via a plurality of auxiliary pipes 327. The spray pipe 330 may be coupled to the subframe 13 of the battery rack 10. The fire extinguishing agent may be sprayed in a downward direction from the spray pipe 330 coupled to the subframe 13. The number of spray pipes 330 may correspond to the number of rows of battery cells 33 received in the battery module 30. For example, if two rows of battery cells 33 are located in one battery module 30, two spray pipes 330 may be connected.

Referring to FIG. 5, the direction of movement of the fire extinguishing agent in the event of a fire may correspond to the direction of an arrow. First, the fire extinguishing agent may be moved ① to the front of the battery rack 10 in the longitudinal direction of the main pipe 310, and then the fire extinguishing agent may be moved ② from the front top of the battery rack 10 to the rear along the branch pipe 320. Subsequently, the fire extinguishing agent may be moved ③ from the rear top to the bottom of the battery rack 10 along the rack pipe 325. Subsequently, the fire extinguishing agent may be moved ④ toward the front of the battery rack 10 along the respective spray pipes 330 and may be supplied to the battery cell 33 where the fire has occurred. The direction of movement of the fire extinguishing agent shown in FIG. 5 may be based on an example of the installation of the pipes, and different arrangements of the pipes may result in different directions of movement of the fire extinguishing agent.

According to some embodiments, a plurality of spray holes 332 may be formed through the spray pipe 330. The position of the spray holes 332 may correspond to the position of each battery cell 33. However, according to some embodiments, the spray pipe 330 may be rotationally arranged such that the spray holes 332 are located in a direction diagonal to the battery module 30. The spray holes 332 may be located in a direction diagonal to the top of each battery cell 33 corresponding to the position of each battery cell 33. Consequently, the fire extinguishing agent moved through the spray pipe 330 may be moved to the corner of the top cover 32 of the battery module 30, and may then be moved to the top of the battery cell 33 through the through-opening 32a formed in the top cover 32 of the battery module 30. A more detailed description thereof will be given later.

In a direct spray system in which the fire extinguishing agent is directly sprayed perpendicularly to the vent of the battery cell 33 to prevent or reduce heat propagation, time may be required to detect thermal runaway of a specific battery cell 33 and to spray the fire extinguishing agent, and before the fire extinguishing agent is sprayed, flames and battery cell debris caused by the thermal runaway may affect battery cells or battery modules adjacent thereto, causing secondary damage. According to some embodiments, therefore, in the event of thermal runaway in a specific battery cell 33 in each battery rack 10, it is possible to block the entry of debris into neighboring cells and the back row through diagonal direct spray and the structure of the extension portion 13b of the extended subframe 13, whereby it is possible to prevent or reduce heat propagation.

Hereinafter, the structure in which the fire extinguishing agent is moved to the corner of the top cover 32 of the battery module 30 and then moved to the top of the battery cell 33 in order to prevent or reduce secondary damage will be described in more detail with reference to FIGS. 6 to 9.

Referring to FIGS. 6 and 7, the seating groove 13a may be formed on the subframe 13 of the battery rack 10 in the insertion direction of the battery module 30. The seating groove 13a may be formed along the row in which the battery cells 33 are located, and the longitudinal direction of the seating groove 13a may correspond to the longitudinal direction of the spray pipe 330. According to some embodiments, a through-hole, through which the fire extinguishing agent may pass if the fire extinguishing agent is sprayed, may be formed in the seating groove 13a.

Referring to FIG. 8, battery cell debris may be ejected in the direction toward the spray pipe 330 and the subframe 13 upon the occurrence of an event in a battery cell in the battery module 30 (see a dotted arrow). According to some embodiments, therefore, the spray pipe 330 may be rotationally arranged toward the interior of the battery rack 10 such that the fire extinguishing agent is sprayed diagonally.

Referring to FIGS. 8 and 9, the spray pipe 330 may be rotationally arranged such that the spray hole 332 is located in a direction diagonal to the battery module 30. The spray pipe 330 may be rotationally arranged such that the spray hole 332 is oriented inwardly of the battery rack 10 (center direction in FIG. 8). That the spray pipe 330 is rotationally arranged may mean that the direction of the spray hole 332 is rotated if the spray pipe 330 is seated in the seating groove 13a in the direction toward the through-opening 32a and/or the vent of the battery cell 33. The rotational angle of the spray pipe 330 will be described later.

According to some embodiments, the fire extinguishing agent may be sprayed from the spray hole 332 in the direction toward the inner edge of the seating groove 13a. The through-hole of the seating groove 13a may be formed at the position corresponding to the direction toward the spray hole 332. The through-hole may be formed on the edge of the seating groove 13a (the upper surface of the battery module facing inwardly of the battery rack) so as to correspond to the spraying direction of the fire extinguishing agent.

According to some embodiments, the fire extinguishing agent sprayed from the spraying hole 332 may be sprayed in a straight line toward the through-hole. The fire extinguishing agent sprayed from the spray hole 332 may be sprayed in a straight line from the through hole toward the top cover 32. According to some embodiments, the diameter of the spray hole 332 may be within a range of about 2 to 2.5 mm (a first range), and a second range of the diameter may be about 1 to 4 mm. The distance between the spray hole 332 and the top cover 32 may be about 8 mm to 12 mm. According to some embodiments, because the size of the spray hole 332 through which the fire extinguishing agent is sprayed is very small, and the distance from the spray hole 332 to the top cover 32 is short, it may be assumed that the fire extinguishing agent is sprayed in a straight line rather than spreading out. That the fire extinguishing agent is sprayed in a straight line may mean not only that the fire extinguishing agent is sprayed in a size within the diameter of the spray hole 332 but also that the fire extinguishing agent is sprayed within a certain range (e.g., less than about 1 mm) based on the diameter of the spray hole 332. The spray range may refer to the extent (size) of the fire extinguishing agent after the fire extinguishing agent sprayed from the spray hole 332 reaches the seating groove 13a or the top cover 32.

According to some embodiments, a plurality of through-openings 32a may be formed in the top cover 32 of the battery module 30 so as to correspond to the position of the vents of the battery cells 33. The through-openings 32a may be formed through the top cover 32 located on the upper surface of the case 31. The through-opening 32a may be formed in the form of a circle, an oval, a long hole, a narrow and long slit, or the like, and may be provided in one or in plural. Because the through-openings 32a are formed so as to correspond to the position of the vents of the battery cells 33, the fire extinguishing agent supplied through the spray pipe 330 may be supplied into the case 31. The case 31 may be provided therein with a busbar holder, and the busbar holder may be in communication with the through-openings 32a. The busbar holder may be located at the position corresponding to the vent of each battery cell 33. The busbar holders may serve as a path through which the fire extinguishing agent is sprayed (a vent channel). Consequently, the fire extinguishing agent sprayed diagonally from the spray hole 332 toward the interior of the battery rack 10 may be sprayed to a position other than the through-opening 32a of the top cover 32 and may then flow into the through-hole so as to be supplied into the case 31. According to some embodiments, the spray hole 332 of the spray pipe 330 is described as being rotationally arranged inwardly of the battery rack 10, but the spray hole 332 of the spray pipe 330 may be rotationally arranged outwardly of the battery rack 10 according to some embodiments.

As described above, the fire extinguishing agent sprayed diagonally from the spray hole 332 toward the interior of the battery rack 10 may be sprayed to a location other than the through-opening 32a of the top cover 32 and may then flow into the through-hole so as to be supplied into the case 31, whereby the likelihood of the spray hole 332 being blocked by debris may be reduced. In the event of thermal runaway in the battery cell 33, flames and debris may damage the spray pipe 330. In order to prevent or reduce such damage, the spray hole 332 may be arranged diagonally, whereby effective fire extinguishing may be achieved.

According to some embodiments, the subframe 13 may include an extension portion 13b extending from the seating groove 13a inwardly of the battery rack 10 and formed in the insertion direction of the battery modules 30. The extension portion 13b may be diagonally bent toward the top cover 32.

Referring to FIG. 9, according to some embodiments, because the subframe 13 may be pressed by the battery module 30 and may droop downward, the battery rack 10 may be formed such that the extension portion 13b and the top cover 32 come into contact with each other upon insertion of the battery module 30 in the state in which the extension portion 13b and the top cover 32 are spaced apart from each other. According to some embodiments, the bent angle A of the extension portion 13b may be set to an angle such that the subframe 13 contacts the top cover 32 if the subframe 13 is pressed by the battery module 30. According to some embodiments, the length D from the center of the spray pipe 330 to the end of the extension portion 13b may be set to a length such that the bent end of the subframe 13 comes into contact with the top cover 32 if the subframe 13 is pressed by the battery module 30.

According to some embodiments, the maximum angle C at which the spray hole 332 is rotationally arranged (the maximum spray angle of the fire extinguishing agent) may be based on the position in front of the through-opening 32a such that the fire extinguishing agent is not sprayed to the through-opening 32a. The minimum angle B at which the spray hole 332 is rotationally arranged (the minimum spray angle of the fire extinguishing agent) may be based on the upper surface of the top cover 32 such that the fire extinguishing agent is not sprayed out of the top cover 32. The minimum angle B at which the spray hole 332 is rotationally arranged may be based on the point F where the top cover 32 and the extension portion 13b contact each other such that the fire extinguishing agent is not sprayed out of the top cover 32.

According to some embodiments, the fire extinguishing agent spray angle at which the fire extinguishing agent is sprayed may have a value between the minimum angle B and the maximum angle C. Consequently, the fire extinguishing agent may not be directly sprayed to the through-opening 32a but may indirectly sprayed, whereby it is possible to minimize damage caused by flames and debris from the battery cell 33. The angle may be based on a transverse horizontal line passing through the center of the spray pipe 330 (see FIG. 9).

According to some embodiments, the spray angles B and C of the fire extinguishing agent from the spray hole 332 may be set based on at least one of the bent angle A of the extension portion 13b, the distance D from the center of the spray pipe 330 to the point F where the extension portion 13b and the top cover 32 contact each other, and the range E of the through-opening of the top cover 32. According to some embodiments, the minimum spray angle B of the fire extinguishing agent and the maximum spray angle C of the fire extinguishing agent may be determined after the bent angle A of the extension portion 13b, the distance D from the center of the spray pipe 330 to the point F where the extension portion 13b and the top cover 32 contact each other, and the range E of the through-opening of the top cover 32 are determined based on the design of the battery module 30 and the battery rack 10.

As described above, in the event of thermal runaway in a specific battery cell 33 in each battery rack 10, it is possible to block the entry of debris into neighboring cells and the back row through diagonal direct spray and the structure of the extension portion 13b of the extended subframe 13, whereby it is possible to prevent or reduce heat propagation. According to some embodiments, the fire extinguishing agent may be sprayed diagonally upon the occurrence of an event in a battery cell in the battery module 30, whereby the likelihood of the spray hole 332 of the spray pipe 330 being blocked by debris may be reduced. According to some embodiments, the space between the battery cell where the event occurred and the battery cell of the back row may be blocked by the structure of the extension portion 13b, whereby it is possible to prevent or reduce instances of flames and debris affecting battery cells adjacent thereto in the event of thermal runaway.

According to some embodiments, the spray pipe 330 may be provided with a thermal member 334 configured to allow the fire extinguishing agent to be selectively sprayed only in the event of a fire. Referring to FIG. 10, the spray pipe 330 may be provided with a plurality of thermal members 334. The thermal members 334 may wrap each of the plurality of spray holes 332 formed in the spray pipe 330 to prevent or reduce leakage of the fire extinguishing agent. One thermal member 334 may be configured to wrap one spray hole 332. The thermal member 334 may be melted by heat generated from a fire in the event of the fire to allow the spray hole 332 to be opened. If the spray hole 332 is opened, the fire extinguishing agent sprayed through the spray pipe 330 may be moved to the top of the battery cell 33. To this end, the through-opening 32a may be formed so as to correspond to the position of the vent of each battery cell 33.

As shown in FIGS. 11 and 12, the thermal member 334 may have a shape that completely surrounds the spray hole 332 and the periphery thereof. According to some embodiments, the thermal member 334 may have a polyhedral, spherical, or hemispherical body. In some figures, the thermal member 334 is shown in a cuboidal shape, but the present disclosure is not limited thereto. The thermal member 334 may be made so as to withstand the final spray pressure of the fire extinguishing agent (e.g., about 2 to 5 bar). The thermal member 334 may be melted by heat discharged from the vent of the battery cell in the event of a fire in the battery cell 33 or by flames or sparks generated by the fire. In the event of a fire, therefore, the spray hole 332 may be opened, whereby the fire extinguishing agent may be sprayed to the fire area. According to some embodiments, the thermal member 334 may melt within a range of about 80 °C to 250 °C. 80 °C may be the temperature at which the thermal member 334 begins to melt, and 250 °C may be the temperature at which the thermal member 334 completely melts. The material of the thermal member 334 may be determined by considering a temperature rise in the event of a fire in the battery module 30. For example, the thermal member 334 may be made of a resin material such as ABS, PP, PC, PE, or PFA. The thermal member 334 may be formed by applying high injection pressure to the resin material such that the thermal member 334 is integrally formed on the spray pipe 330.

By adjusting the thickness, material, and shape of the thermal member 334, the time for heat, flames, or sparks to melt the thermal member 334, thereby opening the spray hole 332, may be adjusted. For example, by forming a thin film portion 334a on the lower surface of the thermal member 334 corresponding to the position of the spray hole 332, the thickness of the thermal member 334 on the spray hole 332 side may be thinner than the other parts. If heat is applied to the thermal member 334, therefore the thin film portion 334a may melt more quickly than the other portions, whereby it is possible to quickly spray the fire extinguishing agent. According to some embodiments, assuming that the thickness of the thermal member 334 in the vicinity of the thin film portion 334a is about 1 mm, the thickness of the thin film portion 334a may be within a range of about 0.3 to 0.6 mm (first range). A second range of the thickness of the thin film portion 334a may be about 0.2 to 0.9 mm.

According to some embodiments, a pair of spray holes 332 may be formed at each position where one thermal member 334 is provided.

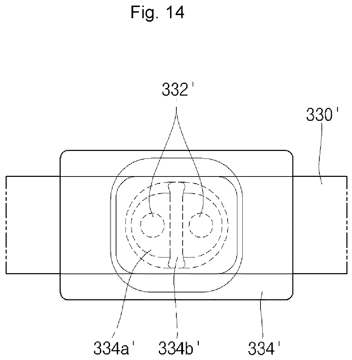

FIG. 13 is an enlarged perspective view showing a part of a lower surface of a spray pipe according to some embodiments of the present disclosure. FIG. 14 is a plan view showing a part of the lower surface of the spray pipe shown in FIG. 13.

Referring to FIGS. 13 and 14, two spray holes 332' covered by a thin film portion 334a' of a thermal member 334' may be formed in a spray pipe 330'. The thin film portion 334a' may have a rib 334b' located between the two spray holes 332'. The rib 334b' may be shaped so as to protrude from the surface of the thin film portion 334a' and may have a thickness greater than the thickness of the thin film portion 334a' at the part where the spray holes 332' are formed. The rib 334b' may be formed so as to be thicker than the spray hole 332' side to prevent or reduce melting between the two spray holes 332' before the spray holes 332' are opened. If heat is applied to the thermal member 334', therefore, the thin film portion 334a' blocking the two spray holes 332a' may be melted earlier than the rib 334b', whereby the spray holes 332' may be opened to spray the fire extinguishing agent.

A fire extinguishing process of the fire extinguishing system according to some embodiments of the present disclosure having the above-described configuration will be described (for convenience, the description is based on the reference symbols of the first embodiment).

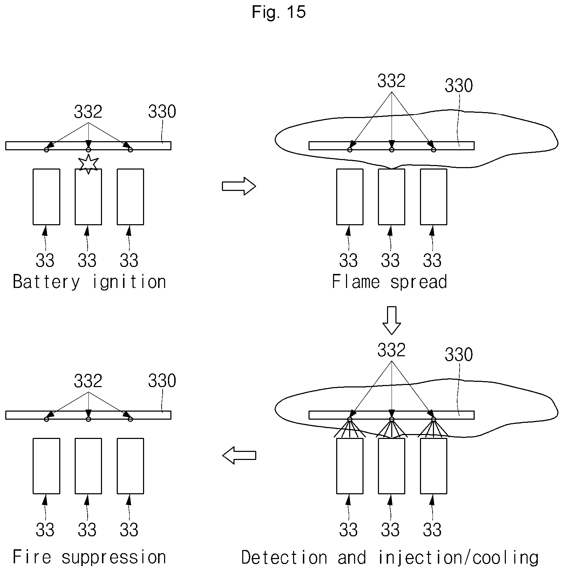

FIG. 15 is a schematic view briefly showing a fire extinguishing process according to some embodiments of the present disclosure.

Referring to FIG. 15, a fire may occur in a battery cell 33 in a specific battery module 30. A spray pipe 330, through which a fire extinguishing agent is sprayed, may be connected to each battery module 30, and a first sensor 510 configured to sense a fire may be provided in the battery module 30. If the temperature in the battery module 30 increases due to heat generation by the fire, the first sensor 510 may sense the same. If the fire is sensed by the first sensor 510, a fire sensing signal may be transmitted to a controller 150 via a BMS of the battery module 30 (the signal may be transmitted in several ways, such as wireless communication or electrical signal transmission by contacts). If the controller 150 senses the fire through the first sensor 510, the controller may open a main valve 130 of an agent container 110. The fire extinguishing agent discharged from the agent container 110 may be adjusted to a final spray pressure by a regulator 140 and may be discharged. The discharged fire extinguishing agent may be transported along a main pipe 310 and a branch pipe 320.

Flames and heat may be generated in the battery cell 33 that is on fire, and the flames and the heat may cause a thermal member 334 of the spray pipe 330 adjacent thereto to melt. If the thermal member 334 melts and a spray hole 332 is opened, the pressure in that area may be lowered, whereby the fire extinguishing agent may move toward the spray pipe 330 with the open spray hole 332 based on the pressure gradient. Consequently, the fire extinguishing agent may be supplied to the battery cell 33 in which the fire has occurred and sprayed to the fire area. Because the fire is extinguished by spraying of the fire extinguishing agent, it is possible to prevent or reduce instances of the fire spreading to battery modules adjacent thereto.

In addition to sensing of the fire by the sensor described above, fire monitoring may be performed by smoke sensing.

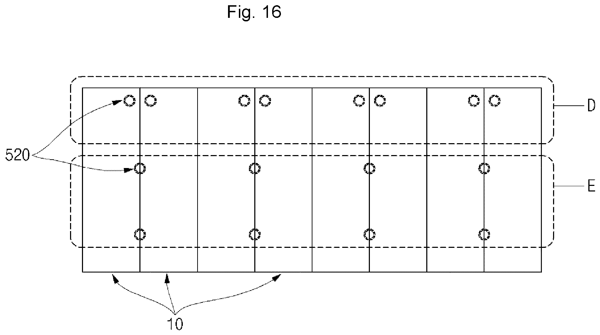

FIG. 16 is a schematic view briefly showing a fire extinguishing system according to some embodiments of the present disclosure.

Referring to FIG. 16, a plurality of second sensors 520 may be installed on a battery rack 10. The second sensors 520 may be used in combination with first sensors 510, or only the second sensors 520 may be used without the first sensors 510. The second sensors 520 may be installed in an upper region D of the battery rack 10, taking into account the characteristic that smoke rises upward. However, because a large amount of smoke may not only rise but also spread around the fire area, the second sensors may also be installed in a lower area E of the battery rack 10 for further sensing. According to some embodiments, one second sensor 520 may be installed in the upper region D of each battery rack 10, and one second sensor 520 may be installed between two battery racks 10. According to some embodiments, one second sensor 520 may be installed in the upper region D of each battery rack 10, and one or two second sensors 520 may be installed between two battery racks 10.

As is apparent from the above description, according to embodiments of the present disclosure, a fire extinguishing system is capable of rapidly suppressing and extinguishing a fire that may occur due to ground fault, short circuit, and the like caused by internal and external factors of an energy storage system and minimizing spread of the fire. Consequently, it is possible to protect an expensive energy storage system and to improve customer reliability.

According to embodiments of the present disclosure, in the event of thermal runaway of a specific battery cell in each battery rack, a fire extinguishing agent may be directly sprayed in a diagonal direction, whereby it is possible to reduce the likelihood of an agent spray hole in a spray pipe being blocked by debris, and therefore it is possible to achieve effective fire extinguishing.

According to embodiments of the present disclosure, it may be possible to block the space between a battery cell where an event has occurred and a battery cell in the back row through an extended guide rail structure, thereby preventing or reducing introduction of debris into battery cells adjacent thereto and thus preventing or reducing heat propagation.

The effects of the present disclosure are not limited to those described above, and other unmentioned technical effects will be apparent to those skilled in the art from the above description of the disclosed embodiments.

The above description and corresponding figures illustrate and describe aspects of some embodiments for implementing a fire extinguishing system of an energy storage system according to some embodiments of the present disclosure, the present disclosure is not limited to the above embodiments, and there is a technical idea of the present disclosure to the extent that various modifications can be made by anyone having ordinary skill in the art to which the present disclosure pertains without departing from the gist of the present disclosure as claimed in the following claims. Although the present disclosure has been described above with reference to limited embodiments and drawings, the present disclosure is not limited thereby and various modifications and variations may be made by a person having ordinary skill in the art to which the present disclosure pertains within the technical ideas of the present disclosure and the equivalent scope of the appended claims, and their equivalents.

## Claims

1. A fire extinguishing system of an energy storage system comprising
a plurality of battery racks each configured to receive a plurality of battery modules, the fire extinguishing system comprising:
a sensing unit configured to sense at least one of temperature, voltage, and smoke of each of the battery modules; and
a fire extinguishing unit configured to spray a fire extinguishing agent to a battery module from among the battery modules based on at least one of the values sensed by the sensing unit being higher than a preset threshold, wherein
the fire extinguishing unit comprises a spray pipe connected to a top of the battery module, the spray pipe being configured to allow the fire extinguishing agent to be sprayed therethrough,
a plurality of spray holes is formed through the spray pipe so as to correspond to positions of battery cells of the battery module, and
the spray pipe is rotationally arranged such that the spray holes are arranged in a direction diagonal to the battery module.

2. The fire extinguishing system as claimed in claim 1, wherein the battery module comprises a top cover having a plurality of through-openings formed so as to correspond to positions of vent holes of the battery cells, and
the through-openings are formed through the top cover.

3. The fire extinguishing system as claimed in claim 2, wherein each of the battery racks comprises:
a main frame on which pipes are installed; and
a subframe configured to support the battery module, the subframe having a seating groove, in which the spray pipe is seated, formed therein, and
the subframe comprises an extension portion extending from the seating groove inwardly of the battery rack, the extension portion being formed in an insertion direction of the battery module.

4. The fire extinguishing system as claimed in claim 3, wherein the extension portion is bent in a direction diagonal to a direction toward the top cover.

5. The fire extinguishing system as claimed in claim 3 or claim 4, wherein
a through-hole configured to allow the fire extinguishing agent sprayed from a spray hole from among the spray holes to pass therethrough is formed in the seating groove, and
the through-hole is formed at a position corresponding to a direction toward the spray hole.

6. The fire extinguishing system as claimed in claim 5, wherein the fire extinguishing system is configured to spray the fire extinguishing agent from the spray hole in a straight line toward the through-hole.

7. The fire extinguishing system as claimed in claim 5, wherein the fire extinguishing system is configured to spray the fire extinguishing agent from the spray hole in a straight line from the through-hole toward the top cover.

8. The fire extinguishing system as claimed in any one of claims 3 to 7, wherein the battery rack is formed such that the extension portion and the top cover come into contact with each other upon insertion of the battery module in a state in which the extension portion and the top cover are spaced apart from each other.

9. The fire extinguishing system as claimed in claim 8, wherein:
(i) a bent angle of the extension portion is set to an angle such that the subframe contacts the top cover based on the subframe being pressed by the battery module; and/or
(ii) a length from a center of the spray pipe to an end of the extension portion is set to a length such that a bent end of the subframe comes into contact with the top cover based on the subframe being pressed by the battery module.

10. The fire extinguishing system as claimed in any one of claims 3 to 9, wherein a spray angle of the fire extinguishing agent from a spray hole from among the spray holes is set based on at least one of a bent angle of the extension portion, a distance from a center of the spray pipe to a point where the extension portion and the top cover contact each other, and a range of a through-opening from among the through-opening of the top cover.

11. The fire extinguishing system as claimed in any one of claims 3 to 10, wherein a maximum angle at which a spray hole from among the spray holes is rotationally arranged is based on a position in front of a through-opening from among the through-openings such that the fire extinguishing agent is not sprayed to the through-opening.

12. The fire extinguishing system as claimed in any one of claims 3 to 11, wherein a minimum angle at which a spray hole from among the spray holes is rotationally arranged is based on an upper surface of the top cover such that the fire extinguishing agent is not sprayed out of the top cover.

13. The fire extinguishing system as claimed in any one of claims 3 to 11, wherein a minimum angle at which a spray hole from among the spray holes is rotationally arranged is based on a point where the top cover and the extension portion contact each other such that the fire extinguishing agent is not sprayed out of the top cover.

14. The fire extinguishing system as claimed in any one of claims 1 to 13, wherein a spray hole from among the spray holes of the spray pipe is rotationally arranged inwardly of the battery rack.

15. The fire extinguishing system as claimed in any one of claims 2 to 14, wherein a distance from a spray hole from among the spray holes to the top cover is in a range of 8 millimeters (mm) to 12 mm.
